# EUROPEAN PATENT SPECIFICATION

(11) **EP 3 011 221 B1**
(45) Date of publication and mention of the grant of the patent: **15.06.2022**
(21) Application number: 14814267.2
(22) Date of filing: 19.06.2014
(51) Int. Cl.: B29C 48/15, B05B 13/02

(54) **APPARATUS FOR PRODUCING A TUBE SEAM**
VORRICHTUNG ZUR HERSTELLUNG EINER ROHRNAHT
APPAREIL POUR RÉALISER UNE JONCTION ENTRE TUBES

(30) Priority: 20.06.2013 FI 20135678
(43) Date of publication of application: 27.04.2016
(73) Proprietor: Uponor Infra Oy, 01510 Vantaa (FI)
(72) Inventor: GLASBERG, Christian, FI-01510 Vantaa (FI); KARJALAINEN, Kari, FI-01510 Vantaa (FI); SJÖBERG, Sven, FI-01510 Vantaa (FI); SIEKKINEN, Alpo, FI-62370 Kangasto (FI)
(74) Representative: Laine IP Oy
(86) International application number: PCT/FI2014/050499
(87) International publication number: WO 2014/202839

(56) References cited:
- EP-A1- 1 985 909
- EP-A1- 1 985 909
- EP-A2- 1 514 609
- DE-A1- 19 802 561
- GB-A- 518 930
- US-A- 3 423 566
- US-A- 3 423 566
- US-A1- 2005 023 387
- US-A1- 2014 091 568

## Description

### Field of technology

The invention relates to a device for coating a pipe or a portion of pipe, for example, in order to make a pipe joint, as well as for connecting an extrusion die to an extruder in tubular, sheet, or film extrusion.

In particular, the invention relates to a device for spreading at least one polymer layer on the surface of a pipe or portion of a pipe on at least part of the outer circumference of the pipe, in which molten polymer is led from a fixed extruder to a moving coating nozzle.

### Background to the invention

Steel pipes coated with a polymer layer, for example, of polyethylene or polypropylene have been used for a long time in oil and gas piping. Such pipes are mechanically strong and their corrosion resistance over the coated part of the pipe is good. The pipes are manufactured in standard lengths and welded together either on land or in ships intended for pipe laying. In order to facilitate making the welded joints of the pipes on the work site, part of each end of the pipe is usually left uncoated at the factory at the point at which the coating would otherwise generally be spread.

Joints welded at the laying location, i.e. joints produced on site, are liable to corrosion. For this reason, a coating layer must be spread on the peripheral weld and the adjacent uncoated parts of the pipe, so that it covers the welded joint entirely and protects it from water and moisture in the environment.

In the field, several ways are known of producing a protective coating for on-site welded joints. Usually welded joints are covered with a polyethylene film (shrink-on sock), which can be shrunk around the joint to protect the weld. This method is responsible for about 65 % of on-site welded coating in the case of steel pipes coating with polyethylene. Another alternative is to coat a peripheral weld with urethane or epoxy-resin protection. Such coatings can be spread on a pipe with the aid of spraying. Other alternatives are machine taping, surface-melting taping, manual taping, injection moulding, and flame spraying. Some of these techniques produce good coating results but are difficult, if not impossible to implement on site in field conditions; some on the other hand do not produce sufficient protection from corrosion.

Publications WO 95/03895 A, US-B1-6 626 376, and WO 01/32316 disclose some methods for coating pipe joints. WO 95/03895 A also discloses a device for coating pipes.

Publication EP 2 100 068 discloses an extrusion method for coating a welded pipe joint, in which the extrusion nozzle and the polymer feed are carried around the pipe. The method is quite slow, because the polymer reservoir must be filled after each or a few joints. The reservoir cannot be very large, because it must be rotated along with the extrusion die and thus it must be filled frequently. Publications US 3,799,725, EP 0 524 092, and DE 10 2006 035 250 disclose extrusion devices, in which the extrusion die is located at a distance from the press part of the extruder.

Publications DE 198 02 561 and US 3,423,566 disclose connectors connecting two pipes and allowing relative movement between the pipes.

### Summary of the invention

It would be advantageous to perform the polymer-layer coating of the welding-joint areas of pipes with a device, in which the polymer layer is fed towards the area to be coated with a separate moveable nozzle and is pressed into a molten form with a separate extruder, which can be installed permanently in a suitable location. The problem then becomes the feeding of the molten polymer to the nozzle or mould forming the polymer layer. Molten polymer is at a high pressure, for example about 300 bar, and its temperature is typically more than 190 - 240 °C. It is difficult to obtain a flexible hose system that withstand such a high pressure and temperature and permit the movement of the nozzle. The diameter of the hose or tube affects the withstanding of pressure. Hoses suitable for high pressure are available in small hose diameters, but in that case the pressure loss at large mass flows rapidly increases to become great and it is difficult to achieve sufficiently large mass flows, for example, for industrial extruder use. If the internal diameter of the tube could be increased, the pressure loss could be controlled and a sufficient mass flow for commercial use could be obtained.

Thus, it would indeed be advantageous to create a feed tube, which can be dimensioned to withstand the temperature and pressure of molten polymer, fed with an extruder, suitable for coating polymer-coated pipes.

According to invention, the intention is to create a rigid-walled feed tube, which permits the nozzle to be taken around the pipe to be coated while the nozzle is connected by the feed tube to a fixed extruder.

The invention is defined in claim 1.

According to one embodiment, the bearings between the connector parts are implemented with conical roller bearings.

In various embodiments of the invention, it is possible to use bearing variations of journal bearings, thrust bearings, radial bearings, and conical bearings, or combinations of these.

According to one embodiment of the invention, the bearing arrangement between the connector parts comprises a bearing implemented with at least one bearing type from the group journal bearing, thrust bearing, radial bearing, and conical bearing and a second bearing fitted at a distance in the longitudinal direction of at least one connector implemented with at least one of the bearings of the group.

According to one embodiment of the invention, at least some or all of the rigid tubes connected by the connector are bent over at least part of their length at an angle from the direction of the longitudinal axis of the connector defined by the connector parts.

Several advantages are obtained with the aid of the invention.

With the aid of the invention, it is possible to arrange a reliable feed route for feeding the polymer coming from the extruder to the moving coating nozzle. The feed tube using for feeding the molten polymer can be formed of rigid metal pipes, so that they are easy to dimension to withstand the necessary pressure and heat. Because the feed tube is mounted in a bearing arrangement in such a way that the connector parts of the connector can rotate around their longitudinal axes, but movement parallel to the longitudinal axis and rotation away from the longitudinal axis is prevented, the pressure in the feed tube cannot stress the bearing arrangement and thus stiffen or prevent the movement of the connector part. By using a sufficient number or connectors and tubes it is possible to build a feed tube that permits even large movements, which are needed, for example, to carry the coating nozzle around a large-diameter pipe. The construction of the connector part is relatively simple, so that it is easy to manufacture and maintain.

By means of this method, there is no need to fill a raw-material reservoir travelling with the extrusion nozzle between the pipe joints to be coated.

With the aid of the invention, it is possible to control the large molten volume of the joints of large pipe sizes, because the feed is continuous from a stationary extruder and the tube dimensions can be more freely selected compared to flexible commercial hoses. The pressure resistance of bendable concertina tubes is limited and the molten mass remains in zones in which the flow is low and the mass oxidizes.

### Description of the drawings

Figure 1 shows one pipe-joint manufacturing device according to the invention.
Figure 2 shows a partial cross-section of a connector according to the invention for manufacturing a feed tube.
Figure 3 shows a cross-section of the connector of Figure 2.
Figure 4 shows a second embodiment of the connector.

### Description of embodiments

In the following, the term coating nozzle refers to a moveable mould or nozzle, with the aid of which a polymer layer can be formed on an area to be coated.

The term extruder refers to a source of molten polymer.

One method and device for coating a polymer-coated pipe, in such a way that the extruder is in a fixed position and the coating nozzle rotates around the pipe parallel to the pipe joint, is disclosed in patent EP 1985909. The present invention relates to leading molten polymer from the extruder to the coating nozzle, for example, in a device or method similar to that described in the publication. This being the case, the actual coating method, the types and treatment of polymer, and similar aspects of the coating method are not described here. In their case we refer to publication EP 1985909.

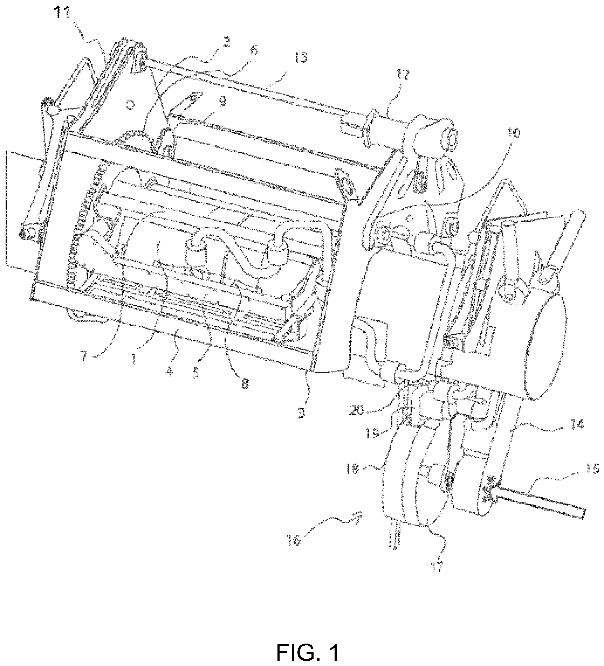

Figure 1 shows a device according to the invention. In the device is a circumferential carrying frame 2 to be fitted in a fixed position around the pipe 1 to be coated. The circumferential carrying frame consists of two plate ends 3 and intermediate bars 4 connecting them, with the aid of which the plate ends 3 are arranged at a distance from each other. Inside the circumferential carrying frame 2 is an auxiliary frame 5, which is located between the plate ends 3, and comprises two gear rings 6 and rods 7 connecting them. In the gear rings 6 are openings, through which the pipe 1 to be coated can be led. The toothing of the gear rings 6 is on their outer circumference and the length of the rods 7 is arranged in such a way that the gear rings 6 come next to the plate ends 3. Attached to the auxiliary frame 5 is a coating nozzle, which can be, for instance, like that described in publication EP 1985909. The auxiliary frame thus acts as a transporter for the coating nozzle, by means of which the coating nozzle is carried around the pipe.

In the plate ends 3 are located gear wheels 9, which are set to mesh with the outer circumference of the gear rings 6. The shafts of the gear wheels 9 pass through the plate ends 3 and at the opposite ends of the shafts are pulley wheels 10, to which drive is arranged by means of belts 11. The pulley wheels 10 and belts 11 are driven by an -electric motor 12, which is attached to one of the plate ends 3. Drive power is taken to the device's opposite plate end 3 by shaft 13. When the electric motor 12 is operated, the auxiliary frame 5 rotates around the pipe 1 to be coated, rotated by the gear rings 6, and the coating nozzle 8 fitted to the auxiliary frame rotates around the pipe 1 to be coated at the location of the joint and the joint can be manufactured with the aid of the coating nozzle 8.

The molten polymer required for coating is prepared by an extruder, which is located in a fixed position. The elements for leading the molten polymer to the coating nozzle comprise a fixed connector unit 14, to which the extruder depicted with the arrow 15 is connected from the extruder's outlet connection. From the fixed connector unit 14 the polymer is lead to the rotating connector 16, in which there are two cylindrical connector pieces, a fixed connector piece, 17, which is connected by a connection to the fixed connector unit 14 and a rotating connector piece 18, which is fitted rotatably to the fixed connector unit 17 in such a way that that rotating connector piece 18 is able to rotate around the common centre axis of the connector pieces. A first tube 19, which is bent at a 90° angle to its direction of exit and connected to a first connector 20, is arranged to leave from the outer circumference of the rotating connector piece 18. The next tube, which is bent at a 90 ° angle immediately after exiting the connector 20, is also connected to the first connector 20. This is followed by several tubes 19, which are bent into angles or a curve or are, if necessary, straight, and connectors 20, by which a feed tube is formed, which runs from the rotating connector 16 to the coating nozzle.

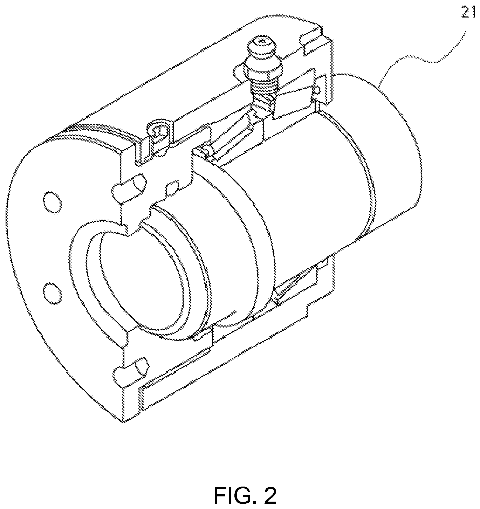

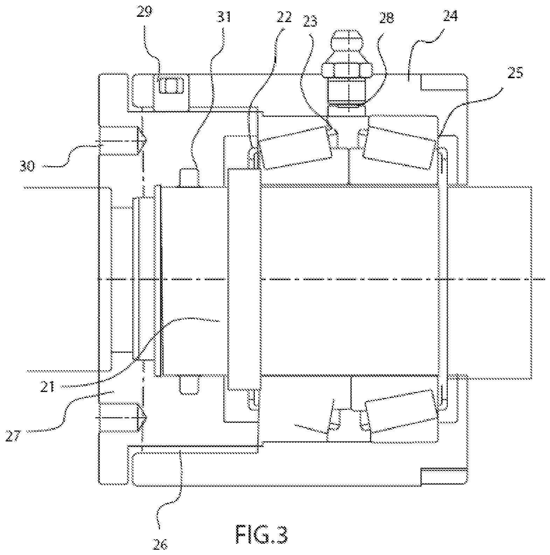

In the example of Figure 1 and in the depicted operating position the feed tube rotates around the pipe 1 to be coated. The connectors 20 and tubes 19 must permit the movement of the coating nozzle 8 around the pipe 1 being coated and at the same time withstand a pressure of 200 - 300 bar and a temperature in the polymer of as much as more than 200 °C. These objectives can be achieved by using a rigid-wall metal tube and a special connector 20. One embodiment of the connector is shown in Figures 2 and 3.

The connector should withstand the pressure used in the system and the internal pressure should not stiffen the movement of the connector. Presently available connectors either do not permit movement at all relative to the joint, are not suitable for use at a sufficiently high pressure, or the internal pressure in them causes compressive forces, which stiffen the movement of the joint. The idea of the invention is that, if a tube bent away from the central axis of the connector is attached to the connector, than a wide path of motion will be obtained for the opposite end of the tube, even though the connector would permit only a rotational movement around the central axis of the connector. The connector parts can then be connected to each other in bearings with a free movement and the construction of the connector will be such that the faces causing internal forces from the effect of pressure can be minimized or entirely eliminated. Thus the internal pressure will not stiffen or interfere with the movement of the connector and the feed tube will have sufficiently free movement.

In the connector shown in Figures 2 and 3 the body of the connector forms a first connector part, a core 21. The inside of the core 21 is preferably a straight cylinder and on its outer surface is a shoulder 22 to form a counter surface for the bearing arrangement 23. In this embodiment, conical roller bearings installed opposite to each other are used as the bearing arrangement 23. By means of conical roller bearings installed opposite to each other a great bending stiffness is achieved. This is important so that the movability of the connector will remain good. Possible deflections could prevent the rotational movement of the connector. In the embodiment of Figures 2 and 3, the bearing arrangement 23 are installed in a V position pointing towards the core 21 in such a way that the distance of the bearing rollers from the core is greatest between the bearings. If the bearings are set opposite to each other, in such a way that the distance of the rollers from the core 21 is greatest at the outer ends of the bearing arrangement 23, the bending stiffness can be increased.

The bearing arrangement 23 is supported against the shoulder 22 by a sleeve 24, in which there is a counter shoulder 25 for the outermost bearing of the connector. The sleeve is fitted around the core 21 and it extends beyond the bearing arrangement 23 and shoulder 22 of the core 21. In the internal surface of the sleeve 24 opposite to the shoulder 25 is a thread 26. The connector is assembled with the aid of a lock nut 27. In the lock nut 27 is a hole, into which the part extending from the core's 21 shoulder 22 fits, and in its outer surface is a thread, which is dimensioned to correspond to sleeve's 24 internal thread. When the lock nut 27 is threaded onto the sleeve 24, the bearing arrangement 23 press against the shoulder 22 pressed by the counter shoulder 25. In this way, the internal circumference of the bearings corresponds to the core 21 and the outer circumference to the sleeve 24 and the core 21 can rotate freely relative to the sleeve and the lock nut 27.

In the sleeve 24 there is also a lubrication nipple 28 and a locking screw 29. In the lock nut 27 there are threaded holes 30 for attaching the tubes 20 and in its internal surface there is a groove for an O-ring 31.

The tubes 20 to be attached to the connector in this example can be attached in two ways. The protruding end of the core 21 permits a welded joint and the lock nut's threaded holes 31 a flange joint. Other kinds of joint are possible, such as, for example, forming the lock nut to form a weldable flange, which is attached as described above by a thread to the connector. Instead of conical roller bearings other kinds of bearings can be used, but then compromises must be made in bending stiffness or the gap between the bearings must be lengthened. Because the connector must withstand the heat appearing during extrusion, the bearings must comprise at least one graphite-filled or graphite-lubricated conical roller bearing. If graphite-filled or graphite-lubricated gearings are used, all of the connector's conical roller bearing can be such. As stated above, in order to achieve good stiffness the bearings can comprise at least two conical roller bearings arranged in a V position.

It is important that the connector parts are connected to each other by means of a bearing, so that the pressure prevailing in the connector or tube cannot affect the ease of movement of the bearing.

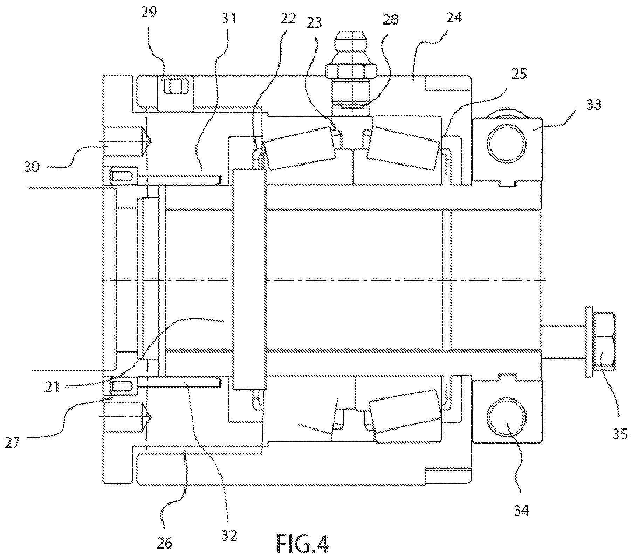

In the embodiment of Figure 4, a journal bearing 32 is fitted to the connector. In this case, the journal bearing 32 is a bearing material sleeve, which has good sliding properties even when not lubricated. In terms of the invention, the selection of the material and type of the bearing sleeve 32 is not, as such, important, but they must naturally withstand the mechanical, chemical, thermal, and other stresses. For the installation of the journal bearing 32, the end of the core 21 is lengthened, as is the lock nut 27. The journal bearing 32 is fitted into the bearing space formed between the core 21 and the lock nut 27.

The journal bearing 32 is intended to receive bending loads and at the same time to permit unobstructed rotational movement between the core 21 and the lock nut 27. The journal bearing 32 is a distance from the bearing arrangement 23. Thus the connector's bending stiffness can be further increased and it can be ensured that the rotational movement does not jam due to deflection taking place relative to the connector's longitudinal axis. Instead of a journal bearing other bearing solutions can be envisaged, but a journal bearing is simple in construction and easily adaptable to the rest of the construction of the connector. Correctly selected, a journal bearing will also withstand well chemical and thermal stresses and the periodic backwards and forwards movements appearing in such connectors.

In addition to a journal bearing 32, in the solution of Figure 4 there is a compression flange 33, which attaches to the opposite end of the core 21 relative to the lock nut 27. In the core 21 is a groove for the longitudinal locking of the compression flange 33 to the core 21 and in the direction of rotation the compression flange locks by friction achieved by the compression of attachment screws 34. The tubes to be attached to the connector 20 can be attached to the compression flange 33 by means of screws 35.

Though the connector permits only rotational movement taking place around the longitudinal axis, by suitably bending the tube suitably in the direction of the longitudinal axis of the connector 20, even a large amount of tolerance can be achieved in the end of the tube. If the connector and various tubes are combined, even a great deal of tolerance can be achieved between a fixed point and the moving point with even complex routes, as can be seen in Figure 1.

Thermal insulation, a thermal resistance, a thermal jacket or other arrangement can be fitted around the feed tube over at least part of the length of the tube, if it is wished to ensure that the temperature of the polymer mass remains sufficiently high, or if it is otherwise necessary to control the temperature. Because the reservoir and tube can take a large amount of polymer, it has a long time of use. Stabilizing agents or additives can be used in the mass in order to retain the properties of the polymer during the time of use.

Though the invention is described above in connection with one of its particularly preferred applications, the invention can be adapted to other applications, in which an extruder is connected to a tool, such as an extruding press, and a tube must conform to extensive or difficult paths and a high operating pressure. The extruder is then connection to a device, which can be moved along a desired path of motion. The invention can be used, for example, in tube, sheet, or film extrusion.

### List of reference numbers

1 pipe to be coated
2 circumferential carrying frame
3 plate end
4 intermediate bar
5 auxiliary frame
6 gear ring
7 rod
8 coating nozzle
9 gear wheel
10 pulley wheel
11 belt
12 electric motor
13 shaft
14 fixed connector unit
15 arrow/extruder
16 rotating connector
17 fixed connector part
18 rotating connector part
19 tube
20 connector
21 core
22 shoulder
23 bearing
24 sleeve
25 counter shoulder
26 thread
27 lock nut
28 lubrication nipple
29 locking screw
30 threaded hole
31 O-ring
32 journal bearing

### List of references

WO 95/03895 A
US-B1-6626 376
WO 01132316
WO 95/03895 A
EP 2 100 068
US 3,799,725,
EP 0 524 092
DE 10 2006 035 250
EP 1985909

## Claims

1. Device for coating a pipe (1) or portion of a pipe, which have an outer surface determined by the outer circumference of the pipe (1) or portion of a pipe, which device comprises:
- a moving device (5), which can rotate around the outer surface of the pipe (1) or portion of a pipe; and
- a coating nozzle (8), which is connected to a molten-polymer source (15) to form a polymer film, which nozzle (8) is attached to the device (5), which can rotate around the pipe;
- a feed tube (19, 20), which forms at least part of the feed route of the molten polymer from the source (15) to the coating nozzle,
**characterized in that**
the feed tube comprises:
- rigid tubes (19). and
- connectors (20), which connectors (20) comprise at least two connector parts (21; 24, 27) for connection to the rigid tubes (19, 20) of the feed tube (19) and bearings (23) fitted between the connector parts, which permits the connector parts (21; 24, 27) to rotate around their common longitudinal axis and keeps the connector parts (21; 24, 27) coaxial to each other so that a movement parallel to the longitudinal axis and rotation away from the longitudinal axis is prevented and the pressure in the feed tube cannot stress the bearings (23) and thus stiffen or prevent the movement of the connector parts, and
the feed tube is formed of
- at least one rigid tube (20) that is bent over at least part of its length to an angle to the direction of the longitudinal axis of a connector (20) determined by the connector parts (21; 24, 27),and
- several rigid tubes (19) and connectors (20).

2. Device according to Claim 1 , **characterized in that** the bearing arrangement (23) between the connector parts (21; 24, 27) is implemented by means of at least one type of bearing from the group journal bearing, thrust bearing, radial bearing, and conical bearing, or combinations of these.

3. Device according to Claim 1, **characterized in that** the bearing arrangement between the connector parts (21; 24, 27) comprises bearings implemented with at least one bearing type from the group journal bearing, thrust bearing, radial bearing, and conical bearing and at least one second bearing arrangement at a distance in the longitudinal direction of the connector implemented with at least one of the bearings of the group.

4. Device according to Claim 1 or 3, **characterized in that** at least one bearing arrangement (23) between the connector parts (21; 24, 27) is implemented with conical roller bearings.

5. Device according to Claim 1 or 3, **characterized in that** at least one bearing arrangement between the connector parts (21; 24, 27) is implemented with a journal bearing (32).

6. Device according to any of Claims 1 - 5, **characterized in that** the bearing arrangement comprises at least one graphite-filled or graphite-lubricated conical roller bearing.

7. Device according to any of Claims 1 - 6, **characterized in that** the bearing arrangement comprises at least two conical roller bearings set in a V position.

## Patentansprüche

1. Vorrichtung zum Beschichten eines Rohrs (1) oder Abschnitt eines Rohrs, die eine Außenoberfläche aufweisen, die von dem Außenumfang des Rohrs (1) oder Abschnitt eines Rohrs bestimmt wird, wobei die Vorrichtung Folgendes umfasst:
- eine Bewegungsvorrichtung (5), die um die Außenoberfläche des Rohrs (1) oder Abschnitts eines Rohrs rotieren kann; und
- eine Beschichtungsdüse (8), die mit einer Quelle (15) geschmolzenen Polymers verbunden ist, um einen Polymerfilm zu bilden, wobei die Düse (8) an der Vorrichtung (5) angebracht ist, die um das Rohr rotieren kann;
- einen Zufuhrschlauch (19, 20), der zumindest Teil des Zufuhrwegs des geschmolzenen Polymers von der Quelle (15) zu der Beschichtungsdüse bildet,
**dadurch gekennzeichnet, dass**
der Zufuhrschlauch umfasst:
- starre Schläuche (19), und
- Verbinder (20), wobei die Verbinder (20) zumindest zwei Verbinderstücke (21; 24, 27) zur Verbindung mit den starren Schläuchen (19, 20) des Zufuhrschlauchs (19) und Lager (23), die zwischen den Verbinderstücken eingesetzt sind, umfassen, was den Verbinderstücken (21; 24, 27) gestattet, um ihre gemeinsame Längsachse zu rotieren, und die Verbinderstücke (21; 24, 27) koaxial zueinander hält, sodass eine Bewegung parallel zu der Längsachse und Rotation weg von der Längsachse verhindert werden und der Druck in dem Zufuhrschlauch die Lager (23) nicht belastet und dadurch die Bewegung der Verbinderstücke versteifen oder verhindern könnte, und der Zufuhrschlauch aus Folgendem gebildet ist
- zumindest einem starren Schlauch (20), der über zumindest Teil seiner Länge zu einem Winkel zu der Richtung der Längsachse eines Verbinders (20), die von den Verbinderstücken (21; 24, 27) bestimmt wird, gebogen ist, und einige starre Schläuche (19) und Verbinder (20).

2. Vorrichtung nach Anspruch 1, **dadurch gekennzeichnet, dass** die Lageranordnung (23) zwischen den Verbinderstücken (21; 24, 27) mittels zumindest einer Art von Lager aus der Gruppe von Zapfenlager, Drucklager, Radiallager und konischem Lager oder Kombinationen dieser implementiert wird.

3. Vorrichtung nach Anspruch 1, **dadurch gekennzeichnet, dass** die Lageranordnung zwischen den Verbinderstücken (21; 24, 27) Lager, die mit zumindest einer Lagerart aus der Gruppe von Zapfenlager, Drucklager, Radiallager und konischem Lager implementiert werden, und zumindest eine zweite Lageranordnung bei einem Abstand in der Längsrichtung von dem Verbinder, die mit zumindest einem der Lager der Gruppe implementiert wird, umfasst.

4. Vorrichtung nach Anspruch 1 oder 3, **dadurch gekennzeichnet, dass** zumindest eine Lageranordnung (23) zwischen den Verbinderstücken (21; 24, 27) mit konischen Walzenlagern implementiert wird.

5. Vorrichtung nach Anspruch 1 oder 3, **dadurch gekennzeichnet, dass** zumindest eine Lageranordnung zwischen den Verbinderstücken (21; 24, 27) mit einem Zapfenlager (32) implementiert wird.

6. Vorrichtung nach einem der Ansprüche 1-5, **dadurch gekennzeichnet, dass** die Lageranordnung zumindest ein Graphit-gefülltes oder Graphit-geschmiertes konisches Walzenlager umfasst.

7. Vorrichtung nach einem der Ansprüche 1-6, **dadurch gekennzeichnet, dass** die Lageranordnung zumindest zwei konische Walzenlager in einer V-Position platziert umfasst.

## Revendications

1. Dispositif de garnissage d'un tuyau (1) ou d'une partie d'un tuyau, qui présente une surface extérieure déterminée par la circonférence extérieure du tuyau (1) ou de la partie d'un tuyau, lequel dispositif comprend :
- un dispositif mobile (5), qui peut tourner autour de la surface extérieure du tuyau (1) ou de la partie d'un tuyau ; et
- une buse de garnissage (8), qui est reliée à une source de polymère fondu (15) pour former un film polymère, laquelle buse (8) est solidaire du dispositif (5), qui peut tourner autour du tuyau ;
- un tube d'alimentation (19, 20), qui forme au moins une partie du trajet d'alimentation du polymère fondu partant de la source (15) et aboutissant à la buse de garnissage,
**caractérisé en ce que**
le tube d'alimentation comprend :
- des tubes rigides (19), et
- des raccords (20), lesquels raccords (20) comprennent au moins deux parties de raccord (21 ; 24, 27) servant au raccordement aux tubes rigides (19, 20) du tube d'alimentation (19) et des paliers (23) montés entre les parties de raccord, ce qui permet aux parties de raccord (21 ; 24, 27) de tourner autour de leur axe longitudinal commun tout en maintenant les parties de raccord (21 ; 24, 27) coaxiales entre elles, de façon à éviter un mouvement parallèle à l'axe longitudinal et une rotation s'éloignant de l'axe longitudinal et à empêcher la pression dans le tube d'alimentation de forcer les paliers (23) et dès lors raidir ou empêcher le mouvement des parties de raccord, et
le tube d'alimentation est constitué de
- au moins un tube rigide (20) qui est plié sur au moins une partie de sa longueur à un angle par rapport à la direction de l'axe longitudinal d'un raccord (20) déterminé par les parties de raccord (21 ; 24, 27), et
- plusieurs tubes rigides (19) et des raccords (20).

2. Dispositif selon la revendication 1, **caractérisé en ce que** la structure de paliers (23) entre les parties de raccord (21 ; 24, 27) est réalisée au moyen d'au moins un type de palier choisi dans le groupe comprenant un palier lisse, un palier de butée, un palier radial et un palier conique, ou des combinaisons de ceux-ci.

3. Dispositif selon la revendication 1, **caractérisé en ce que** la structure de paliers entre les parties de raccord (21 ; 24, 27) comprend des paliers réalisés avec au moins un type de palier choisi dans le groupe comprenant un palier lisse, un palier de butée, un palier radial et un palier conique et au moins une seconde structure de paliers à une distance dans la direction longitudinale du raccord réalisée avec au moins un des paliers du groupe.

4. Dispositif selon la revendication 1 ou 3, **caractérisé en ce qu'**au moins une structure de paliers (23) entre les parties de raccord (21 ; 24, 27) est réalisée avec des paliers à rouleaux coniques.

5. Dispositif selon la revendication 1 ou 3, **caractérisé en ce qu'**au moins une structure de paliers entre les parties de raccord (21 ; 24, 27) est réalisée avec un palier lisse (32).

6. Dispositif selon l'une quelconque des revendications 1-5, **caractérisé en ce que** la structure de paliers comprend au moins un palier à rouleaux coniques chargé en graphite ou lubrifié au graphite.

7. Dispositif selon l'une quelconque des revendications 1-6, **caractérisé en ce que** la structure de paliers comprend au moins deux paliers à rouleaux coniques placés dans une position en V.
